# EUROPEAN PATENT APPLICATION

(11) **EP 4 478 169 A1**
(43) Date of publication of application: **18.12.2024**
(21) Application number: 23784283.6
(22) Date of filing: 04.04.2023
(51) Int. Cl.: G06F 3/0488

(54) **CONTROL METHOD AND CENTRAL CONTROL EQUIPMENT**

(30) Priority: 07.04.2022 CN 202210357767
(71) Applicant: Huawei Technologies Co., Ltd., Shenzhen, Guangdong 518129 (CN)
(72) Inventor: LIU, Heng, Shenzhen, Guangdong 518129 (CN); WANG, Yafei, Shenzhen, Guangdong 518129 (CN); SONG, Xiaohui, Shenzhen, Guangdong 518129 (CN)
(74) Representative: Gill Jennings & Every LLP
(86) International application number: PCT/CN2023/086259
(87) International publication number: WO 2023/193720

(57) **Abstract**

Embodiments of this application provide a control method and a central control device. The method includes: A central control device divides a display area into a plurality of grids based on configuration information, and determines a layout of functional areas in a gridded display area. The central control device displays a plurality of device controls in the functional area. The plurality of device controls one-to-one correspond to a plurality of electronic devices controlled by the central control device, each device control includes device information of a corresponding electronic device, and the device information of the electronic device is obtained by the central control device from a cloud. In this way, the central control device uses a grid and functional area division manner, so that a platform does not need to process device data. Instead, the central control device implements an automatic layout of the device controls based on device information obtained from the platform, so as to meet diversified requirements of different central control vendors

## Description

This application claims priority to Chinese Patent Application No. 202210357767.4, filed with the China National Intellectual Property Administration on April 7, 2022 and entitled "CONTROL METHOD AND CENTRAL CONTROL DEVICE", which is incorporated herein by reference in its entirety.

### TECHNICAL FIELD

Embodiments of this application relate to the field of terminal devices, and in particular, to a control method and a central control device.

### BACKGROUND

With development of an internet of things (Internet of Things, IoT) industry chain, types and styles of IoT devices are increasing, and various vendors successively launch central control devices, so that users can centrally manage different devices at home. However, different vendors and different types of central control devices have different requirements on an overall desktop layout and a device management style. Correspondingly, a cloud platform side needs to process device data, to meet the requirements of the vendors. As quantities of central control device models and vendors increase, a workload on the cloud platform side increases.

### SUMMARY

Embodiments of this application provide a control method and a central control device. In the control method, a central control device may provide a customized desktop layout display manner.

According to a first aspect, an embodiment of this application provides a control method, applied to a central control device. The method includes: The central control device divides a display area into a plurality of grids based on first configuration information. The first configuration information indicates a quantity of grids of the display area and a dimension of a single grid. Then, the central control device determines a layout of a plurality of functional areas in the display area based on second configuration information. The second configuration information indicates a quantity of grids occupied by each of the plurality of functional areas and a location of each functional area in the display area. The central control device displays a plurality of device controls in at least one of the plurality of functional areas. The plurality of device controls one-to-one correspond to a plurality of electronic devices controlled by the central control device, each device control includes device information of a corresponding electronic device, and the device information of the electronic device is obtained by the central control device from a cloud. In this way, the central control device uses a grid and functional area division manner, so that a platform does not need to process device data. Instead, the central control device implements an automatic layout of the device controls based on device information obtained from the platform, so as to meet diversified requirements of different central control vendors.

For example, the first configuration information is display division information in embodiments of this application. The second configuration information is layout information of the functional area in embodiments of this application.

For example, the electronic device controlled by the central control device is an IoT device.

For example, the central control device performs data exchange with the cloud based on wireless communication, and the cloud performs data exchange with the plurality of electronic devices based on wireless communication.

According to the first aspect, the first configuration information includes first quantity information and dimension information, the first quantity information indicates a quantity of grids in a horizontal direction of the display area and a quantity of grids in a vertical direction of the display area, and the dimension information indicates a width and a height of the single grid. In this way, the central control device may divide the display area based on pre-stored configuration information, so that the display area is granulated.

According to any one of the first aspect or the foregoing implementation of the first aspect, the plurality of grids are evenly arranged in the horizontal direction and the vertical direction of the display area.

According to any one of the first aspect or the foregoing implementations of the first aspect, the second configuration information includes second quantity information and start location information, the second quantity information indicates the quantity of grids occupied by each of the plurality of functional areas, and the start location information indicates a location of a start grid in each functional area in the display area. In this way, the central control device may perform customized layout on a gridded (which may also be referred to as granulated) display area, so as to layout the plurality of functional areas in the grids.

According to any one of the first aspect or the foregoing implementations of the first aspect, displaying the plurality of device controls in the at least one of the plurality of functional areas includes: obtaining device information of the plurality of electronic devices from the cloud, where the device information includes at least one of the following: device identification information of a single electronic device, a type of a single electronic device, state information of a single electronic device, and information about an allowed adjustment range of a single electronic device; generating corresponding control identification information for each of the plurality of electronic devices, and storing a correspondence between the device information of the plurality of electronic devices and the plurality of pieces of control identification information; indicating, to a target application, a part of the device information and a plurality of pieces of device identification information generated for the plurality of electronic devices, where the part of the device information includes at least one piece of information in the device information; and displaying the plurality of device controls in the at least one functional area, where the plurality of device controls are generated by the target application based on the part of the device information. In this way, the electronic device may filter information that is of the electronic device and that is obtained from the cloud, so that a target device can obtain only a part of the information of the electronic devices, thereby protecting the information of the electronic devices and information about the platform. In addition, the central control device interacts with the target application based on a control identifier, to protect data security of the electronic device.

For example, the control identification information is a widget ID in embodiments of this application.

For example, the device identification information includes a device name, a device ID, a device address, and the like.

For example, the part of the information of the devices obtained by the target device includes a device name, a device type, a device state, and an allowed adjustment range of a device.

According to any one of the first aspect or the foregoing implementations of the first aspect, the method further includes: obtaining touch event information of the target application, where the touch event information includes control identification information of a target electronic device and state update information of the target electronic device, the touch event information indicates that a touch event for a control of the target electronic device is received, the touch event indicates to update a state of the target electronic device, and the target electronic device belongs to the plurality of electronic devices; verifying the control identification information of the target electronic device and the touch event; and updating the control of the target electronic device after verification on the control identification information of the target electronic device and the touch event succeeds. In this way, the central control device may verify the control identification information and the touch event, to prevent malware from masquerading as the target application, so as to control electronic devices in a home of a user. For example, if the malware sends the touch event information to the central control device, if verification on either of the control identification information and the touch event fails, the central control device does not control the electronic device to perform a corresponding action, thereby ensuring security and reliability of the electronic device.

According to any one of the first aspect or the foregoing implementations of the first aspect, the verifying the identification information of the target electronic device and the touch event includes: detecting whether the control identification information of the target electronic device is invalid, where the control identification information of the target electronic device is invalid when the central control device does not display the plurality of functional areas, and the control identification information of the target electronic device is valid when the central control device displays the plurality of functional areas; and when detecting that the control identification information of the electronic device is valid, determining that verification on the target electronic device succeeds.

According to any one of the first aspect or the foregoing implementations of the first aspect, the verifying the identification information of the target electronic device and the touch event includes: determining, based on a parameter detected by a touch sensor, whether a touch operation on the display area is received; and when detecting that the touch operation on the display area occurs, determining that verification on the touch event succeeds.

According to any one of the first aspect or the foregoing implementations of the first aspect, the updating the control of the target electronic device includes: determining, based on the correspondence between the device information of the plurality of electronic devices and the plurality of pieces of control identification information, device identification information of the target electronic device corresponding to the control identification information of the target electronic device; sending a state update request message to the cloud, where the state update request message includes the device identification information of the target electronic device and the state update information of the target electronic device, and the state update request message indicates the cloud to update a current state of the target electronic device to a state indicated by the state update information; receiving a state update response message sent by the cloud, where the state update response message includes the device identification information of the target electronic device and current state information of the target electronic device, and the current state information indicates a state of the target electronic device that is updated based on an indication of the cloud; determining, based on the correspondence between the device information of the plurality of electronic devices and the plurality of pieces of control identification information, the control identification information of the target electronic device that corresponds to the device identification information of the target electronic device; transmitting the control identification information and the current state information of the target electronic device to the target application, to indicate the target application to update the control of the target electronic device; and obtaining a new control that is generated by the target application and that corresponds to the target electronic device, and updating the control of the target electronic device to the new control, where the new control is generated by the target application based on the current state information. In this way, interaction between the central control device and the target application is based on the control identification information, to effectively ensure the data security of the electronic device.

According to a second aspect, an embodiment of this application provides a central control device. The central control device includes one or more processors, a memory, and one or more computer programs. The one or more computer programs are stored in the memory, and when the computer program is executed by the one or more processors, the central control device is enabled to perform the following steps: dividing a display area into a plurality of grids based on first configuration information, where the configuration information indicates a quantity of grids of the display area and a dimension of a single grid; determining a layout of a plurality of functional areas in the display area based on second configuration information, where the second configuration information indicates a quantity of grids occupied by each of the plurality of functional areas and a location of each functional area in the display area; and displaying a plurality of device controls in at least one of the plurality of functional areas, where the plurality of device controls one-to-one correspond to a plurality of electronic devices controlled by the central control device.

According to the second aspect, the first configuration information includes first quantity information and dimension information, the first quantity information indicates a quantity of grids in a horizontal direction of the display area and a quantity of grids in a vertical direction of the display area, and the dimension information indicates a width and a height of the single grid.

According to any one of the second aspect or the foregoing implementation of the second aspect, the plurality of grids are evenly arranged in the horizontal direction and the vertical direction of the display area.

According to any one of the second aspect or the foregoing implementations of the second aspect, the second configuration information includes second quantity information and start location information, the second quantity information indicates the quantity of grids occupied by each of the plurality of functional areas, and the start location information indicates a location of a start grid in each functional area in the display area.

According to any one of the second aspect or the foregoing implementations of the second aspect, when the computer program is executed by the one or more processors, the central control device is enabled to perform the following steps: obtaining device information of the plurality of electronic devices, where the device information includes at least one of the following: device identification information of a single electronic device, a type of a single electronic device, state information of a single electronic device, and information about an allowed adjustment range of a single electronic device; generating corresponding control identification information for each of the plurality of electronic devices, and storing a correspondence between the device information of the plurality of electronic devices and the plurality of pieces of control identification information; indicating, to a target application, a part of the device information and a plurality of pieces of device identification information generated for the plurality of electronic devices, where the part of the device information includes at least one piece of information in the device information; and displaying the plurality of device controls in the at least one functional area, where the plurality of device controls are generated by the target application based on the part of the device information.

According to any one of the second aspect or the foregoing implementations of the second aspect, when the computer program is executed by the one or more processors, the central control device is enabled to perform the following steps: obtaining touch event information of the target application, where the touch event information includes control identification information of a target electronic device and state update information of the target electronic device, the touch event information indicates that a touch event for a control of the target electronic device is received, the touch event indicates to update a state of the target electronic device, and the target electronic device belongs to the plurality of electronic devices; verifying the control identification information of the target electronic device and the touch event; and updating the control of the target electronic device after verification on the control identification information of the target electronic device and the touch event succeeds.

According to any one of the second aspect or the foregoing implementations of the second aspect, when the computer program is executed by the one or more processors, the central control device is enabled to perform the following steps: detecting whether the control identification information of the target electronic device is invalid, where the control identification information of the target electronic device is invalid when the central control device does not display the plurality of functional areas, and the control identification information of the target electronic device is valid when the central control device displays the plurality of functional areas; and when detecting that the control identification information of the electronic device is valid, determining that verification on the target electronic device succeeds.

According to any one of the second aspect or the foregoing implementations of the second aspect, when the computer program is executed by the one or more processors, the central control device is enabled to perform the following steps: determining, based on a parameter detected by a touch sensor, whether a touch operation on the display area is received; and when detecting that the touch operation on the display area occurs, determining that verification on the touch event succeeds.

According to any one of the second aspect or the foregoing implementations of the second aspect, when the computer program is executed by the one or more processors, the central control device is enabled to perform the following steps: determining, based on the correspondence between the device information of the plurality of electronic devices and the plurality of pieces of control identification information, device identification information of the target electronic device corresponding to the control identification information of the target electronic device; sending a state update request message to the cloud, where the state update request message includes the device identification information of the target electronic device and the state update information of the target electronic device, and the state update request message indicates the cloud to update a current state of the target electronic device to a state indicated by the state update information; receiving a state update response message sent by the cloud, where the state update response message includes the device identification information of the target electronic device and current state information of the target electronic device, and the current state information indicates a state of the target electronic device that is updated based on an indication of the cloud; determining, based on the correspondence between the device information of the plurality of electronic devices and the plurality of pieces of control identification information, the control identification information of the target electronic device that corresponds to the device identification information of the target electronic device; transmitting the control identification information and the current state information of the target electronic device to the target application, to indicate the target application to update the control of the target electronic device; and obtaining a new control that is generated by the target application and that corresponds to the target electronic device, and updating the control of the target electronic device to the new control, where the new control is generated by the target application based on the current state information.

Any one of the second aspect and the implementations of the second aspect corresponds to any one of the first aspect and the implementations of the first aspect respectively. For technical effects corresponding to any one of the second aspect and the implementations of the second aspect, refer to the technical effects corresponding to any one of the first aspect and the implementations of the first aspect. Details are not described herein again.

According to a third aspect, an embodiment of this application provides a computerreadable medium, configured to store a computer program. The computer program includes instructions for performing the method according to any one of the first aspect or the possible implementations of the first aspect.

According to a fourth aspect, an embodiment of this application provides a computer program. The computer program includes instructions for performing the method according to any one of the first aspect or the possible implementations of the first aspect.

According to a fifth aspect, an embodiment of this application provides a chip. The chip includes a processing circuit and a transceiver pin. The transceiver pin and the processing circuit communicate with each other through an internal connection path. The processing circuit performs the method according to any one of the first aspect or the possible implementations of the first aspect, to control a receiving pin to receive a signal and a sending pin to send a signal.

According to a sixth aspect, an embodiment of this application provides a communication system. The system includes the central control device, the plurality of electronic devices, and the cloud according to the first aspect.

### BRIEF DESCRIPTION OF DRAWINGS

To describe the technical solutions in embodiments of this application more clearly, the following briefly introduces the accompanying drawings used in describing embodiments of this application. It is clear that the accompanying drawings in the following description show merely some embodiments of this application, and a person of ordinary skill in the art may still derive other drawings from these accompanying drawings without creative efforts.
FIG. 1 shows an example of a diagram of a hardware structure of an electronic device;
FIG. 2 shows an example of a diagram of a software structure of an electronic device;
FIG. 3a and FIG. 3b show examples of diagrams of display interfaces of central control devices;
FIG. 4 is a diagram of a communication system according to an embodiment of this application;
FIG. 5 shows an example of a diagram of a control method;
FIG. 6a and FIG. 6b show examples of diagrams of grid division;
FIG. 6c shows an example of a diagram of coordinates;
FIG. 7a shows an example of a diagram of a layout of functional areas;
FIG. 7b shows an example of a diagram of a layout of functional areas;
FIG. 8 shows an example of a device widget display method;
FIG. 9 shows an example of a diagram of data interaction;
FIG. 10 shows an example of a diagram of widget display;
FIG. 11 shows an example of a schematic flowchart of a control method;
FIG. 12a and FIG. 12b show examples of diagrams of interfaces;
FIG. 13 shows an example of a schematic flowchart of a control method; and
FIG. 14 shows an example of a diagram of a structure of an apparatus.

### DESCRIPTION OF EMBODIMENTS

The following clearly and completely describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

The term "and/or" in this specification describes only an association relationship for describing associated objects and indicates that three relationships may exist. For example, A and/or B may indicate the following three cases: Only A exists, both A and B exist, and only B exists.

In the specification and claims in embodiments of this application, the terms "first", "second", and the like are intended to distinguish between different objects but do not indicate a particular order of the objects. For example, a first target object, a second target object, and the like are used for distinguishing between different target objects, but are not used for describing a specific order of the target objects.

In embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.

In the description of embodiments of this application, unless otherwise specified, "a plurality of" means two or more. For example, a plurality of processing units are two or more processing units, and a plurality of systems are two or more systems.

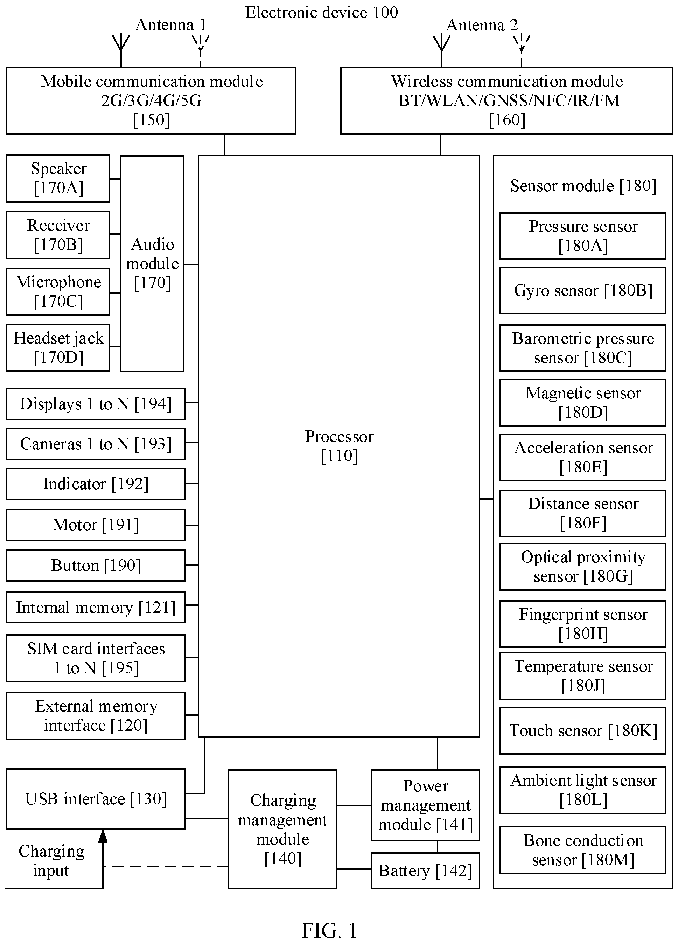

FIG. 1 is a diagram of a structure of an electronic device 100. It should be understood that the electronic device 100 shown in FIG. 1 is merely an example of an electronic device, and the electronic device 100 may have more or fewer components than those shown in the figure, a combination of two or more components, or a different component configuration. Various components shown in FIG. 1 may be implemented in hardware including one or more signal processing and/or application-specific integrated circuits, software, or a combination of hardware and software. For example, the electronic device 100 may be a central control device in embodiments of this application, or may be an electronic device managed by a central control device in embodiments of this application. For example, the electronic device may be a smart home device (for example, an air conditioner or a table lamp), or may be a mobile phone, a tablet, a television, a wearable device, or the like. This is not limited in this application.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device 100. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor may directly invoke the instructions or the data from the memory. This avoids repeated access, reduces waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronous serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be configured to: perform audio communication, and sample, quantize, and encode an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call through a Bluetooth headset. Both the I2S interface and the PCM interface may be configured to perform audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 via the CSI, to implement a photographing function of the electronic device 100. The processor 110 communicates with the display 194 via the DSI interface, to implement a display function of the electronic device 100.

The GPIO interface may be configured by software. The GPIO interface may be configured for a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, may be configured to transmit data between the electronic device 100 and a peripheral device, or may be configured to connect to a headset for playing audio through the headset. The interface may be further configured to connect to another electronic device such as an AR device.

It may be understood that an interface connection relationship between the modules shown in this embodiment of this application is merely an example for description, and does not constitute a limitation on the structure of the electronic device 100. In some other embodiments of this application, the electronic device 100 may alternatively use an interface connection manner different from that in the foregoing embodiment, or a combination of a plurality of interface connection manners.

The charging management module 140 is configured to receive a charging input from a charger. The charger may be a wireless charger or a wired charger. In some embodiments of wired charging, the charging management module 140 may receive a charging input from the wired charger through the USB interface 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, an external memory, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-/highfrequency signal. The demodulator is configured to demodulate a received electromagnetic wave signal into a low-frequency baseband signal. Then, the demodulator transmits the low-frequency baseband signal obtained through demodulation to the baseband processor for processing. The baseband processor processes the low-frequency baseband signal, and then transmits a processed signal to the application processor. The application processor outputs a sound signal via an audio device (which is not limited to the speaker 170A, the receiver 170B, or the like), or displays an image or a video on the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the electronic device 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna 2.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 implements a display function through the GPU, the display 194, the application processor, and the like. The GPU is a microprocessor for image processing, and is connected to the display 194 and the application processor. The GPU is configured to perform mathematical and geometrical calculation, and is configured to render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) photoelectric transistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transform or the like on frequency energy.

The video codec is configured to compress or decompress a digital video. The electronic device 100 may support one or more video codecs. In this way, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, and simulates a biological neural network structure such as a transmission mode between neurons in a human brain to perform rapid processing on input information, and can perform continuous selflearning. Applications such as intelligent cognition of the electronic device 100 may be implemented through the NPU, for example, image recognition, facial recognition, speech recognition, and text understanding.

The external memory interface 120 may be configured to connect to an external storage card, for example, a micro SD card, to extend a storage capability of the electronic device 100. The external storage card communicates with the processor 110 through the external memory interface 120, to implement a data storage function. For example, files such as music and a video are stored in the external storage card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a voice playing function or an image playing function), and the like. The data storage area may store data (such as audio data and an address book) created during use of the electronic device 100, and the like. In addition, the internal memory 121 may include a high-speed random access memory, or may include a nonvolatile memory, for example, at least one magnetic disk storage device, a flash memory, or a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules of the audio module 170 are disposed in the processor 110.

The speaker 170A, also referred to as a "loudspeaker", is configured to convert an electrical audio signal into a sound signal. The electronic device 100 may be configured to listen to music or answer a call in a hands-free mode over the speaker 170A.

The receiver 170B, also referred to as an "earpiece", is configured to convert an electrical audio signal into a sound signal. When a call is answered or voice information is received through the electronic device 100, the receiver 170B may be put close to a human ear to listen to a voice.

The microphone 170C, also referred to as a "mike" or a "mic", is configured to convert a sound signal into an electrical signal. When making a call or sending voice information, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, so as to implement a directional recording function and the like.

The headset jack 170D is configured to connect to a wired headset. The headset jack 170D may be the USB interface 130 or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch location based on a detection signal of the pressure sensor 180A. In some embodiments, touch operations that are performed in a same touch location but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on the SMS message application icon, an instruction for creating a new SMS message is performed.

The gyro sensor 180B may be configured to determine a moving posture of the electronic device 100. In some embodiments, an angular velocity of the electronic device 100 around three axes (namely, axes x, y, and z) may be determined through the gyro sensor 180B. The gyro sensor 180B may be configured to implement image stabilization during photographing. For example, when the shutter is pressed, the gyro sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyro sensor 180B may also be used in a navigation scenario and a somatic game scenario.

The barometric pressure sensor 180C is configured to measure barometric pressure. In some embodiments, the electronic device 100 calculates an altitude through the barometric pressure measured by the barometric pressure sensor 180C, to assist in positioning and navigation.

The magnetic sensor 180D includes a Hall sensor. The electronic device 100 may detect opening and closing of a flip cover through the magnetic sensor 180D. In some embodiments, when the electronic device 100 is a flip phone, the electronic device 100 may detect opening and closing of a flip cover based on the magnetic sensor 180D. Further, a feature, for example, automatic unlocking upon opening of the flip cover is set based on a detected opening or closing state of the flip cover.

The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the electronic device, and is used in an application such as switching between a landscape mode and a portrait mode or a pedometer.

The distance sensor 180F is configured to measure a distance. The electronic device 100 may measure the distance in an infrared manner or a laser manner. In some embodiments, in a photographing scenario, the electronic device 100 may measure a distance through the distance sensor 180F to implement quick focusing.

The optical proximity sensor 180G may include, for example, a light-emitting diode (LED) and an optical detector, for example, a photodiode. The light-emitting diode may be an infrared light-emitting diode. The electronic device 100 emits infrared light through the light-emitting diode. The electronic device 100 detects infrared reflected light from a nearby object through the photodiode. When sufficient reflected light is detected, it may be determined that there is an object near the electronic device 100. When insufficient reflected light is detected, the electronic device 100 may determine that there is no object near the electronic device 100. The electronic device 100 may detect, through the optical proximity sensor 180G, that the user holds the electronic device 100 close to an ear for a call, to automatically turn off a screen for power saving. The optical proximity sensor 180G may also be used in a smart cover mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy through the temperature detected by the temperature sensor 180J. For example, when the temperature reported by the temperature sensor 180J exceeds a threshold, the electronic device 100 lowers performance of a processor nearby the temperature sensor 180J, to reduce power consumption for thermal protection. In some other embodiments, when the temperature is below another threshold, the electronic device 100 heats the battery 142, to prevent the electronic device 100 from being shut down abnormally due to a low temperature. In some other embodiments, when the temperature is below still another threshold, the electronic device 100 boosts an output voltage of the battery 142, to avoid abnormal shutdown caused by a low temperature.

The touch sensor 180K is also referred to as a "touch panel". The touch sensor 180K may be disposed on the display 194, and the touch sensor 180K and the display 194 constitute a touchscreen that is also referred to as a "touch screen". The touch sensor 180K is configured to detect a touch operation performed on or near the touch sensor 180K. The touch sensor may transfer the detected touch operation to the application processor to determine a type of the touch event. A visual output related to the touch operation may be provided through the display 194. In some other embodiments, the touch sensor 180K may alternatively be disposed on a surface of the electronic device 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may alternatively be disposed in the headset, to obtain a bone conduction headset. The audio module 170 may obtain a speech signal through parsing based on the vibration signal that is of the vibration bone of the vocal-cord part and that is obtained by the bone conduction sensor 180M, to implement a speech function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a button input, and generate a button signal input related to user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195. The plurality of cards may be of a same type, or may be of different types. The SIM card interface 195 may be compatible with different types of SIM cards. The SIM card interface 195 is also compatible with an external storage card. The electronic device 100 interacts with a network through the SIM card, to implement functions such as conversation and data communication. In some embodiments, the electronic device 100 uses an eSIM, that is, an embedded SIM card. The eSIM card may be embedded into the electronic device 100, and cannot be separated from the electronic device 100.

A software system of the electronic device 100 may use a layered architecture, an eventdriven architecture, a microkernel architecture, a micro service architecture, or a cloud architecture. In embodiments of this application, an Android system with a layered architecture is used as an example to describe a software structure of the electronic device 100.

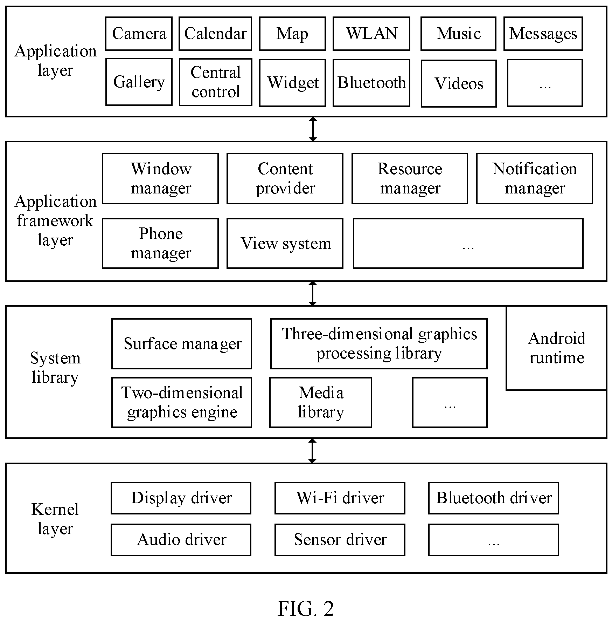

FIG. 2 is a block diagram of a software structure of the electronic device 100 according to an embodiment of this application.

In a layered architecture of the electronic device 100, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 2, the application packages may include applications such as Camera, Gallery, Calendar, Phone, Map, Navigation, WLAN, Bluetooth, Music, Videos, Messages, Widget, and Central Control.

The central control application is used to manage desktop display and the like of a central control device. A specific control manner is described in detail in the following embodiments. In this embodiment of this application, the central control application may also be referred to as a central control module. The central control device may install the application before delivery, or may download the application from a cloud after being started for the first time and connected to the cloud. This is not limited in this application. In this embodiment of this application, the central control application is optionally provided by a platform.

The widget application may be used to generate and maintain a device widget. The device widget may also be referred to as a device control, device control graphics, a device control user interface, or the like. This is not limited in this application. Optionally, the widget application is provided by a central control device vendor, and may also be referred to as a third-party application. This is not limited in this application.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a central control module, a resource manager, a notification manager, and the like.

The window manager is used to manage a window program. The window manager may obtain a size of a display, determine whether there is a status bar, perform screen locking, take a screenshot, and the like.

The content provider is used to store and obtain data, and enable the data to be accessed by an application. The data may include a video, an image, audio, calls that are made and answered, a browsing history, a browsing bookmark, an address book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The phone manager is used to provide a communication function for the electronic device 100, for example, management of a call status (including answering, declining, or the like).

The resource manager provides various resources such as a localized character string, an icon, an image, a layout file, and a video file for an application.

The notification manager enables an application to display notification information in a status bar, and may be used to convey a notification-type message. The message may automatically disappear after a short pause without user interaction. For example, the notification manager is used to notify download completion, give a message notification, and the like. The notification manager may alternatively be a notification that appears in a top status bar of the system in a form of a graph or a scroll bar text, for example, a notification of an application that is run in a background, or may be a notification that appears on a screen in a form of a dialog window. For example, text information is displayed in the status bar, an announcement is produced, an electronic device vibrates, or an indicator light blinks.

The Android runtime includes a kernel library and a virtual machine. The Android runtime is responsible for scheduling and management of the Android system.

The kernel library includes two parts: a function that needs to be called in Java language and a kernel library of Android.

The application layer and the application framework layer run on the virtual machine. The virtual machine executes Java files at the application layer and the application framework layer as binary files. The virtual machine is configured to implement functions such as object lifecycle management, stack management, thread management, security and exception management, and garbage collection.

The system library may include a plurality of functional modules, such as a surface manager (surface manager), a media library (Media Libraries), a three-dimensional graphics processing library (for example, OpenGL ES), and a 2D graphics engine (for example, SGL).

The surface manager is used to manage a display subsystem and provide fusion of 2D and 3D layers for a plurality of applications.

The media library supports playback and recording in a plurality of commonly used audio and video formats, static image files, and the like. The media library may support a plurality of audio and video coding formats, for example, MPEG-4, H.264, MP3, AAC, AMR, JPG, and PNG.

The three-dimensional graphics processing library is used to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

It can be understood that components included in the system framework layer, and the system library and runtime layer that are shown in FIG. 2 do not constitute any specific limitation on the electronic device 100. In some other embodiments of this application, the electronic device 100 may include more or fewer components than those shown in the figure, a combination of some components, splits from some components, or a different component layout.

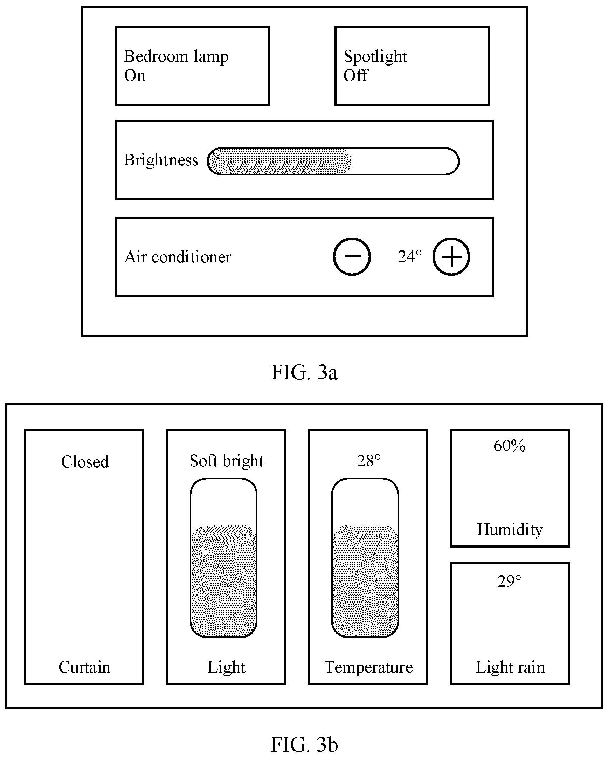

FIG. 3a and FIG. 3b show examples of diagrams of display interfaces of central control devices. Refer to FIG. 3a and FIG. 3b. FIG. 3a and FIG. 3b correspond respectively to central control devices of different specifications from different vendors. A desktop of the central control device may be displayed on a display of the central control device. The desktop includes one or more controls, and the controls may include a device control and/or another control. Each device control corresponds to an electronic device controlled by the central control device. For example, a device corresponding to a bedroom lamp control shown in FIG. 3a is a lamp in a bedroom of a user. The user can control turning on or off, brightness adjusting, and the like of the bedroom lamp via the central control device. As shown in FIG. 3a and FIG. 3b, different central control devices have different specifications (namely, dimensions) of displays, layouts of controls corresponding to the devices are also different, and images (which may also be referred to as user interfaces) displayed by the controls corresponding to the devices are also different. Correspondingly, for central control devices with different style requirements, a platform needs to design central control desktops of different styles to meet style requirements of central control device vendors. With increase of central control device products and access vendors, development and maintenance costs will increase for the platform.

Embodiments of this application provide a control method that is applicable to central control devices of different specifications, to meet diversified requirements of different central control devices and ensure security of device data.

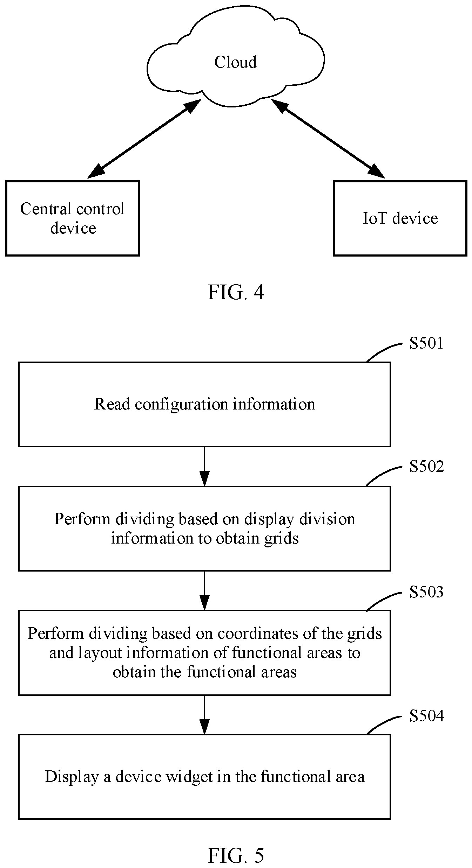

Before the technical solutions in embodiments of this application are described, a communication system in embodiments of this application is first described with reference to the accompanying drawings. FIG. 4 is a diagram of a communication system according to an embodiment of this application. The communication system includes a cloud, a central control device, and an IoT device. The cloud may include a server or a server cluster. The central control device is produced by a central control device vendor. A maintenance vendor of the cloud and a central control vendor of the central control device may be the same or different. This is not limited in this application. For example, the IoT device may include one or more IoT devices, for example, a subordinate speaker, a television, an air conditioner, or a lamp. This is not limited in this application. It should be noted that a quantity of central control devices shown in FIG. 4 is merely an example. In another embodiment, the cloud may be connected to central control devices in scenarios such as different home or office scenarios. A plurality of central control devices or IoT devices may be included in a same scenario. This is not limited in this application. The cloud can communicate with the central control device through a wireless connection, and the IoT device can communicate with the central control device through a wireless connection. The wireless connection may be maintained based on a Wi-Fi network, a cellular network, or the like. This is not limited in this application.

With reference to FIG. 3, FIG. 5 shows an example of a diagram of a control method. Refer to FIG. 5. The control method specifically includes the following steps.

S501: Read configuration information.

For example, a central control module in a central control device may maintain the configuration information, and the configuration information may be stored in a memory or another storage area. This is not limited in this application.

The configuration information is set before delivery, and the configuration information may be set jointly by a platform (namely, a cloud maintenance vendor) and a central control device party (namely, a central control device production and maintenance vendor).

For example, after the central control device is powered on for the first time or initialized, the central control device reads the stored configuration information. The configuration information includes but is not limited to display division information and layout information of functional areas. The display division information indicates to divide a display according to a specified specification. The layout information of the functional areas indicates a layout of the functional areas on the display.

S502: Perform dividing based on the display division information to obtain grids.

For example, after reading the configuration information, the central control device

(specifically, the central control module) may divide the display of the central control device based on the display division information.

For example, the display division information may include grid quantity information and grid dimension information. The grid quantity information indicates a quantity of grids obtained by dividing the display. The grid dimension information indicates a dimension of each grid. Optionally, the foregoing value is in a form of a key-value pair. For example, in data expressed in a JS object notation (JavaScript Object Notation, JSON) format, the display division information is shown as follows:

```
          {
             "rowNum": 12
             "colNum": 7
             "cellWidth": 25
             "cellHeight": 25
          }
```

"rowNum" indicates a quantity of horizontal grids, "colNum" indicates a quantity of vertical tables, "cellWidth" indicates a width (in pixels) of each grid, and "cellHeight" indicates a height (in pixels) of each grid.

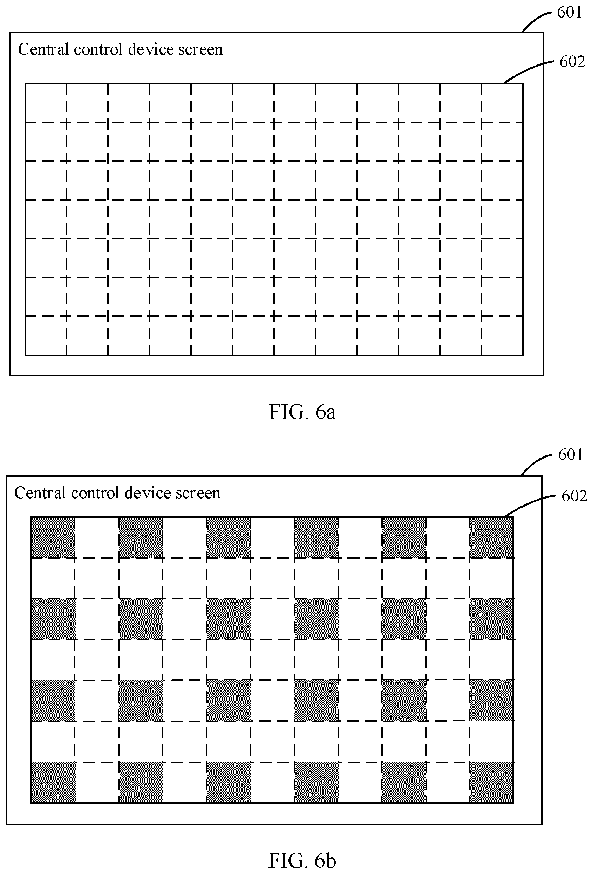

For example, FIG. 6a shows an example of a diagram of grid division. Refer to FIG. 6a. A central control device screen 601 (which may also be referred to as a central control device display) includes a display area 602 (which may also be referred to as a desktop area or a central control panel display area) and another area. The display area 602 is configured to display a desktop, a control, and the like. The central control module divides the display area 602 horizontally into 12 grids and vertically into seven grids based on display division information. A width of each grid is 25 pixels, and a height of each grid is 25 pixels.

For another example, FIG. 6a shows an example of a diagram of grid division. Refer to FIG. 6a. The central control module divides the display area 602 horizontally into six grids and vertically into four grids based on the display division information. A width of each grid is 25 pixels, and a height of each grid is 25 pixels.

In this embodiment of this application, the display division information may be preset based on dimensions of displays of different central control devices, and may be set based on an actual requirement. This is not limited in this application. Quantities and dimensions of grids shown in FIG. 6a and FIG. 6b are merely examples. This is not limited in this application.

S503: Perform dividing based on coordinates of the grids and the layout information of the functional areas to obtain the functional areas.

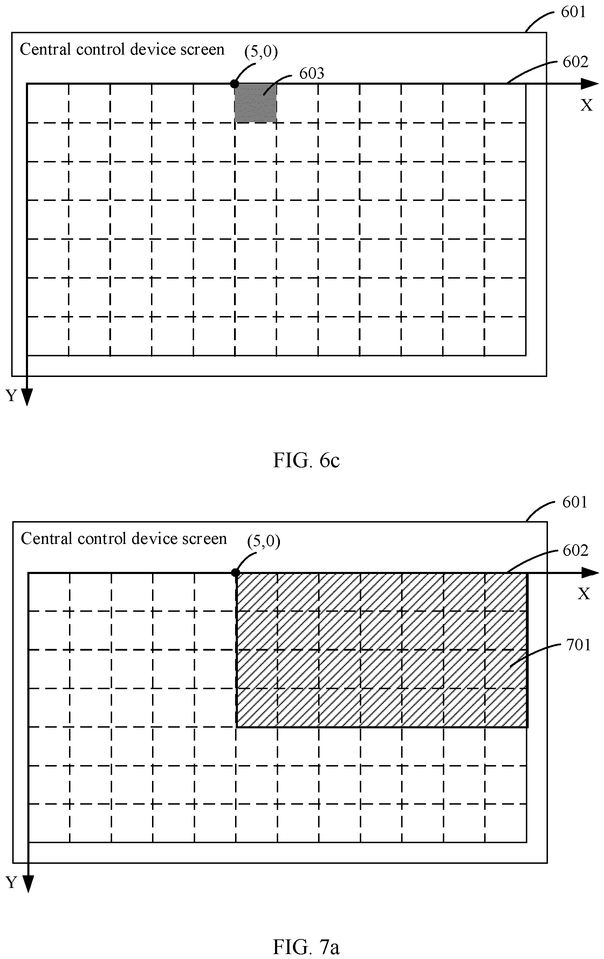

For example, after grid division, the central control module may obtain the coordinates of each grid. For example, FIG. 6c shows an example of a diagram of coordinates. Refer to FIG. 6c. In this embodiment of this application, the central control module establishes a coordinate system by using an upper left corner of the display area 602 as an origin. The coordinates of each grid are coordinates of an upper left corner of each grid in the coordinate system. For example, as shown in FIG. 6c, coordinates of an upper left corner of a grid 603 are (5, 0), that is, coordinates of the grid.

For example, the layout information of the functional areas includes but is not limited to a quantity of grids occupied by each functional area, coordinates of a start grid, and a name of a functional area.

Optionally, the foregoing value is in a form of a key-value pair. For example, in data expressed in a JS object notation (JavaScript Object Notation, JSON) format, the layout information is shown as follows:

```
          {
             "title": "device management",
             "spanRow": 7,
             "spanCol": 4,
             "rowIndex" : 5,
             "colIndex" : 0
          }
```

"title" indicates a name of a functional area, "spanRow" indicates a quantity of horizontal grids occupied by a functional area, "spanCol" indicates a quantity of vertical grids occupied by a functional area, "rowIndex" indicates a horizontal coordinate of a start grid of a functional area, and "colIndex" indicates a vertical coordinate of a start grid of a functional area.

For example, FIG. 7a shows an example of a diagram of a layout of functional areas. Refer to a shaded part 701 shown in FIG. 7a. A functional area whose functional area name is "device management" (device management area for short) occupies seven horizontal grids, the device management area occupies four vertical grids, and start coordinates of a start grid of the device management area, namely, a grid at an upper left corner of the device management area are (5, 0). In this case, a location and a size of the device management area are shown by the shaded part 701. An area name may or may not be displayed in the area. This is not limited in this application.

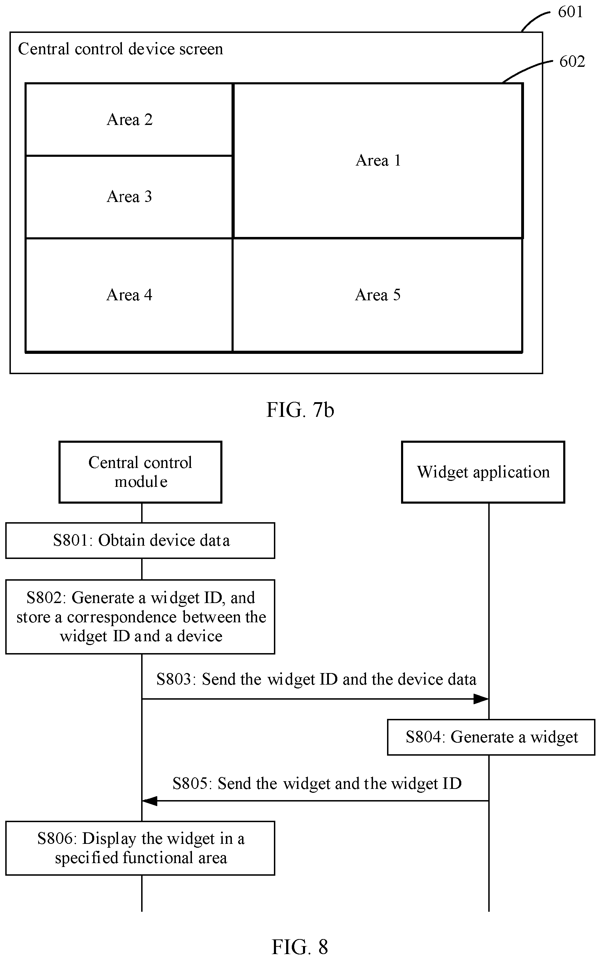

FIG. 7b shows an example of a diagram of a layout of functional areas. Refer to FIG. 7b. For example, the central control module lays out the functional areas according to the foregoing method, to obtain locations and sizes of areas 1 to 5 in a display area 602.

S504: Display a device widget in the functional area.

For example, the central control module may display the device widget in one or more functional areas. In this embodiment of this application, the device widget may also be understood as a control, a device image, a device control user interface, or the like corresponding to a device, for example, the bedroom lamp control in FIG. 3a.

FIG. 8 shows an example of a device widget display method. Refer to FIG. 8. The method specifically includes the following steps.

S801: A central control module obtains device data.

For example, the central control module obtains the device data from a cloud. The device data includes device data of an electronic device (for example, an IoT device) controlled by the central control module. The device data includes but is not limited to device identification information, a device state, a device type, and an allowed state range. The device identification information identifies a device, and may be, for example, a device ID, a device MAC address, and/or a device name. The device state indicates a current state of the IoT device. For example, a current temperature of an air conditioner is set to 28°. The allowed state range indicates an allowed adjustment range of a device. For example, an allowed adjustment range of an air conditioner is 15° to 30°. The device type indicates a type of a device. For example, the device type may be a television or an air conditioner. For example, the device data may further include other privacy data, for example, data such as a user account of a device.

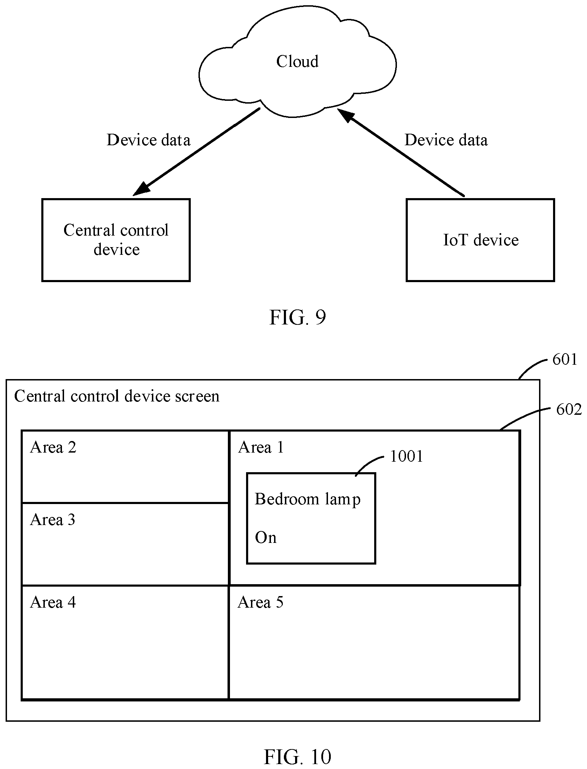

Refer to FIG. 9. For example, a cloud may obtain device data of an IoT device in real time. The cloud sends the obtained device data to a central control device. For example, when the central control device is powered on for the first time or factory settings are restored, that is, when a desktop needs to be re-laid, the central control device may send a request message to the cloud, to request to obtain the device data. The cloud obtains the device data of the IoT device in real time. The cloud may send latest obtained device data to the central control device.

S802: The central control module generates a widget ID, and stores a correspondence between the widget ID and a device.

For example, the central control module may receive device data that is of a plurality of IoT devices and that is sent by the cloud. The central control module generates a widget ID for each IoT device, and the widget ID is unique. The central control module stores a correspondence between the device data and the widget ID, for example, a correspondence between a widget ID1 and device data of a television, and a correspondence between a widget ID2 and device data of an air conditioner.

S803: The central control module sends the widget ID and the device data to a widget application.

For example, the central control module filters the device data, and sends only the device type, the device name, the device state, and the allowed state range together with the widget ID to the widget application, to indicate the widget application to generate a corresponding device widget, thereby protecting information security of the device.

S804: The widget application generates a widget.

For example, the widget application may generate, based on the obtained device data, a corresponding device widget (which may be referred to as a widget for short), namely, a user interface corresponding to a device control to be displayed on a desktop, or the widget may be referred to as a device widget view. For example, the widget application records a correspondence between each widget and a widget ID.

S805: The widget application sends the widget and the widget ID to the central control module.

For example, the widget application generates a plurality of widgets, and the widget application sends each widget and a widget ID corresponding to the widget to the central control module.

S806: The central control module displays the widget in a specified functional area.

For example, as described above, the central control module may divide the display area 602 into a plurality of functional areas, and some or all of the plurality of functional areas may be used to display widgets. A specific area may be determined based on an indication in configuration information. This is not limited in this application. For example, the "device management" area is for displaying a device widget. The central control module can display a plurality of obtained device widgets in the device management area.

For example, shapes and sizes of the device widgets may be the same or different. The central control module may perform schematic layout in the device management area based on the shapes and sizes of the device widgets, to improve aesthetics of widget display. For example, the device management area may include a plurality of subpages. For example, a first subpage area is insufficient to display all widgets, and the central control module may set a second subpage in the device management area, so as to display all the widgets in the second subpage. The plurality of subpages can be arranged in sequence. A user can browse the plurality of subpages in the device management area.

FIG. 10 shows an example of a diagram of widget display. Refer to FIG. 10. A widget application generates, based on device data of a bedroom lamp, for example, a device name (namely, a bedroom lamp), a device type (namely, a lamp), a device state (that is, a current state is on), and an allowed range (namely, on and off), a device widget corresponding to the bedroom lamp, and transmits the device widget corresponding to the bedroom lamp to a central control module. The central control module receives the device widget and a widget ID of the bedroom lamp. The central control module displays a widget 1001 in a device management area (for example, an area 1). The widget includes but is not limited to information such as the device name (namely, the bedroom lamp) and the device state (namely, on).

In this embodiment of this application, after completing layout of a desktop, the central control module may display a laid-out desktop each time the central control device switches to the foreground, which may also be understood as switching to the desktop or switching to a home page.

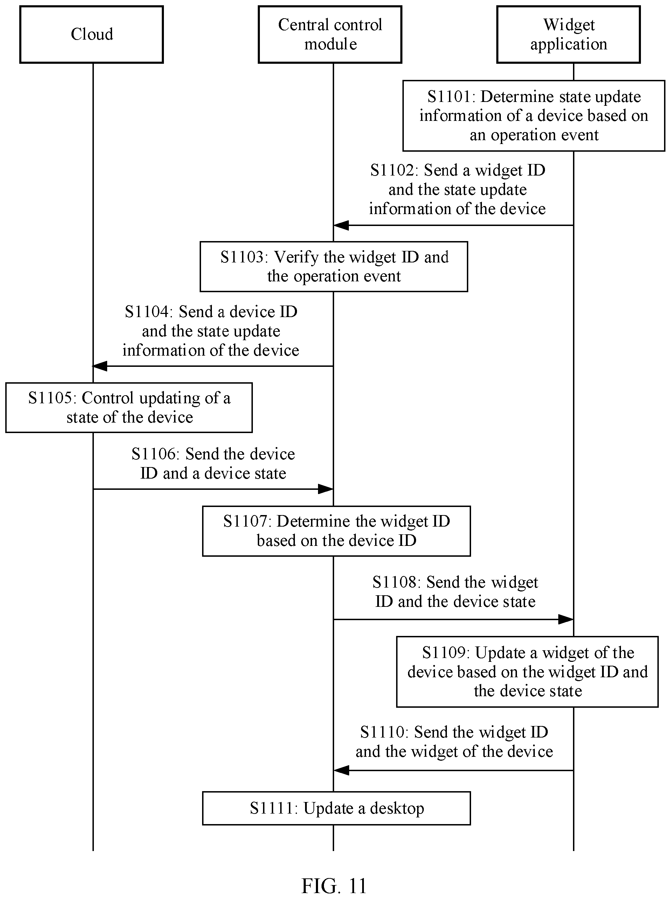

FIG. 11 shows an example of a schematic flowchart of a control method. Refer to FIG. 11. The control method specifically includes the following steps.

S1101: A widget application determines state update information of a device based on an operation event.

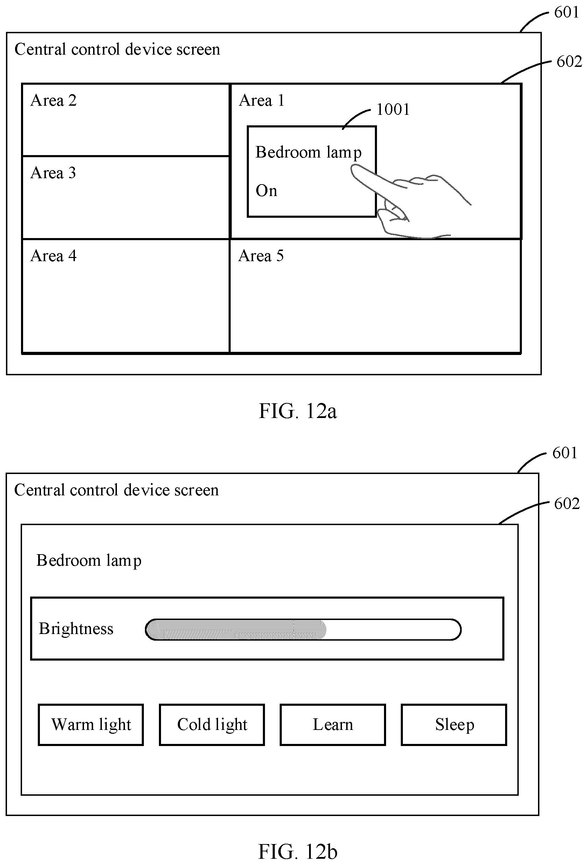

For example, refer to FIG. 12a. A user may tap a widget corresponding to a bedroom lamp, to turn off the bedroom lamp. A touch sensor of a central control device may detect a location touched by the user, and send a touch event to a central control module and the widget application. The widget application may determine, based on the location touched by the user, a widget touched by the user, and determine a corresponding widget ID and a state of a device adjusted by the user. For example, as described above, the user operates the bedroom lamp control displayed on the desktop of the central control device, and taps to turn off the bedroom lamp. The widget application may determine state update information of a corresponding device based on a received user operation. The state update information indicates an adjusted state of the device, for example, the bedroom lamp is turned off.

S1102: The widget application sends a widget ID and the state update information of the device to the central control module.

For example, the widget application may determine, based on a correspondence between the widget ID and a widget, a widget ID corresponding to a widget operated by the user, and the widget application may send the widget ID and state update information (for example, a bedroom lamp is turned off) to the central control module.

S1103: The central control module verifies the widget ID and the operation event.

For example, after receiving the widget ID and the state update information, the central control module verifies the widget ID and the operation event. For example, as described above, the central control module may also receive the touch event reported by the touch sensor, and the central control module may determine that the touch event occurs. In other words, the widget ID and the state update information that are sent by the widget application are sent after a user operation event occurs. Therefore, the central control device is not attacked by malware. For example, the malware may disguise as the widget application and send state update information to the central control module. After the central control module receives the state update information, if the touch event reported by the touch sensor is not received, it may be determined that the state update information is not instructed by the user, the central control module does not perform processing, or the central control module may display alarm information to indicate that a malware attack currently exists.

For example, the central control module verifies the widget ID, to detect whether the widget ID is valid. In this embodiment of this application, if the user taps any control to enter a control setting interface, or when the central control device turns off a screen, that is, a desktop is not displayed in the foreground, that is, the central control module detects that the desktop is switched to the background, the central control module invalidates all widget IDs. Optionally, the central control module may mark a correspondence item (which include a widget ID, device data, or the like) to which the widget ID belongs as invalid. Optionally, the central control module may alternatively mark the widget ID as invalid. A specific marking manner may be set based on an actual requirement. This is not limited in this application. For example, refer to FIG. 12b. For example, after a user taps a bedroom lamp control, a central control module switches a desktop to the background in response to the received operation, and displays a bedroom lamp control interface. The control interface is sent to the central control module by a widget application. Optionally, the interface may be displayed based on the procedure in FIG. 8. Optionally, the interface may be directly generated by the widget application. This is not limited in this application.

For example, after detecting that the desktop is switched to the background, the central control module invalidates all widget IDs, thereby preventing a malware attack. For example, malware may obtain a widget ID of the widget application, and send the widget ID and state update information to the central control module. In this case, because the desktop is in the background, that is, all widget IDs are invalid, after receiving the widget ID, the central control module detects that the widget ID is in an invalid state. No processing is performed or an alarm is generated.

In this embodiment of this application, after the central control module successfully verifies both the widget ID and the touch event, the central control module performs S 1104, to improve security of the central control device.

S 1104: The central control device sends a device ID and the state update information of the device to a cloud.

For example, after the central control device successfully verifies the widget ID and the touch event, the central control module searches, based on a correspondence between the widget ID and device data, for device identification information (for example, a device ID) corresponding to the widget ID, and sends the device ID and the state update information to the cloud.

S1105: The cloud controls updating of a state of the device.

For example, after receiving the device ID and the state update information, the cloud may determine, based on the device ID, the device that needs to be controlled, and adjust a state of the device based on the state update information, for example, turn off a bedroom lamp.

S1106: The cloud sends the device ID and a device state to the central control module.

For example, in this embodiment of this application, the cloud may obtain the state of the device in real time. A state change of the device is controlled by the cloud. For example, in S1105, the cloud controls the bedroom lamp to be turned off. For example, a state change of the device is further manually controlled by a user. For example, the user manually controls, via a bedroom lamp switch, the bedroom lamp to be turned off. After detecting that the state of the device is updated, the cloud sends, to the central control module, the device ID and a current state of the device, which may also be understood as an updated state of the device, for example, a bedroom lamp is turned off.

S1107: The central control module determines the widget ID based on the device ID.

For example, the central control module may determine, based on the stored correspondence between the widget ID and the device data, the widget ID corresponding to the device ID.

S1108: The central control module sends the widget ID and the device state to the widget application.

For example, the central control module sends the widget ID and the device state (namely, the current state of the device) to the widget application, to indicate a device application to update a widget.

S1109: The widget application updates a widget of the device based on the widget ID and the device state.

For example, the widget application receives the widget ID and the device state. The widget application may determine, based on the widget ID, a widget that needs to be updated. The widget application may update content of the widget based on the device state. Optionally, the widget application may regenerate, based on the device state, a widget corresponding to the device. A device state indicated in a new widget is an updated state of the device, for example, a bedroom lamp is turned off. Optionally, the widget application may update content of only some controls in the widget. This is not limited in this application.

S1110: The widget application sends the widget ID and the widget of the device to the central control module.

In an example, as described above, the widget application may generate a new widget, and the widget application sends the widget ID and the newly generated widget to the central control module.

In another example, the widget application may update some content of a device widget. For example, for the widget corresponding to the bedroom lamp, only the state of the bedroom lamp needs to be updated, that is, currently displayed "on" is updated to "off". For example, the device widget may also be considered as a widget including a plurality of controls, and the widget application may send an image (or referred to as a user interface) of a control that needs to be updated to the central control module.

S1111: The central control module updates the desktop.

For example, the central control module may determine, based on the received widget ID, a widget that needs to be updated. In an example, if the widget application sends a new widget, the central control module updates the widget corresponding to the widget ID to the new widget. In another example, if the widget application sends some controls of the widget, the central control module may update some controls of the widget corresponding to the widget ID.

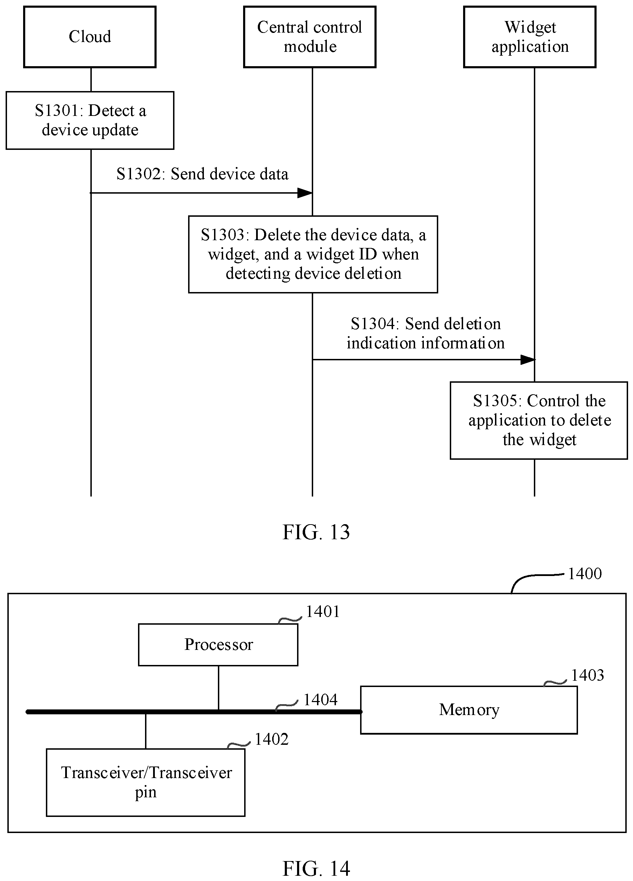

FIG. 13 shows an example of a schematic flowchart of a control method. Refer to FIG. 13. The control method specifically includes the following steps.

S1301: A cloud detects a device update.

For example, the device update in this embodiment refers to adding or deleting a device. For example, a subordinate speaker is recently purchased for a user's home, and the subordinate speaker is connected to the cloud. For another example, a television in the user's home is disconnected from the cloud, or a television is deregistered from the cloud, which may also be referred to as that a television is offline.

S1302: The cloud sends device data to a central control module.

For example, the cloud sends device data of an added or deleted device to the central control module. For a concept of the device data, refer to the foregoing descriptions. Details are not described herein again.

S1303: The central control module deletes the device data, a widget, and a widget ID when detecting device deletion.

For example, in this embodiment, the central control module determines, based on an indication of the cloud, that a device is deleted, for example, a television is removed from the user's home. The central control module deletes, based on device data of the television, the stored device data of the television and a corresponding widget and widget ID.

In another example, if the central control module determines, based on an indication of the cloud, that a device is to be added, for example, a subordinate speaker is recently purchased for a user's home, and the subordinate speaker is connected to the cloud, processing may be performed according to steps S802 to S806. Details are not described herein again.

S1304: The central control module sends deletion indication information to a widget application.

For example, the central control module sends the deletion indication information to the widget application. The indication information includes a deletion instruction and a widget ID, and indicates the widget application to delete a corresponding widget.

S1305: The widget application deletes the widget.

For example, in response to the received deletion indication information, the widget application deletes the widget corresponding to the widget ID.

In a possible implementation, if a desktop is not displayed in the foreground when a central control device performs the steps in FIG. 13, for example, the central control device is currently in a screen-off state, the central control module and the widget application still perform the steps in FIG. 13. When a device is added, the central control module marks a widget ID as invalid after the central control module generates the widget ID for the device. After the central control module detects that the desktop is switched to the foreground, the central control module displays an updated desktop.

It may be understood that, to implement the foregoing functions, an electronic device includes corresponding hardware and/or software modules for performing the functions. With reference to algorithm steps of examples described in embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of this application.

In an example, FIG. 14 is a schematic block diagram of an apparatus 1400 according to an embodiment of this application. The apparatus 1400 may include a processor 1401 and a transceiver/transceiver pin 1402. Optionally, the apparatus 1400 further includes a memory 1403.

Components of the apparatus 1400 are coupled together through a bus 1404. In addition to a data bus, the bus 1404 further includes a power bus, a control bus, and a status signal bus. However, for clear description, various buses are referred to as the bus 1404 in the figure.

Optionally, the memory 1403 may be configured to store instructions for the foregoing method embodiments. The processor 1401 may be configured to execute the instructions in the memory 1403, control a receiving pin to receive a signal, and control a sending pin to send a signal.

The apparatus 1400 may be an electronic device in the foregoing method embodiments or a chip of the electronic device.

All related content of the steps in the foregoing method embodiments may be cited in function descriptions of corresponding functional modules. Details are not described herein again.

An embodiment further provides a computer storage medium. The computer storage medium stores computer instructions. When the computer instructions are run on an electronic device, the electronic device is enabled to perform the foregoing related method steps, to implement the method in the foregoing embodiment.

An embodiment further provides a computer program product. When the computer program product runs on a computer, the computer is enabled to perform the foregoing related steps, to implement the method in the foregoing embodiment.

In addition, an embodiment of this application further provides an apparatus. The apparatus may be specifically a chip, a component, or a module. The apparatus may include a processor and a memory that are connected. The memory is configured to store computer-executable instructions. When the apparatus runs, the processor may execute the computer-executable instructions stored in the memory, to enable the chip to perform the methods in the foregoing method embodiments.

The electronic device, the computer storage medium, the computer program product, or the chip provided in embodiments may be configured to perform the corresponding method provided above. Therefore, for beneficial effects that can be achieved, refer to the beneficial effects of the corresponding method provided above. Details are not described herein again.

Based on the descriptions of the foregoing implementations, it may be understood by a person skilled in the art that, for ease and brevity of description, division into the foregoing functional modules is merely used as an example for description. During actual application, the foregoing functions may be allocated to different functional modules for implementation based on a requirement, that is, an internal structure of an apparatus is divided into different functional modules, to implement all or some of the functions described above.

In the several embodiments provided in this application, it should be understood that the disclosed apparatus and method may be implemented in other manners. For example, the described apparatus embodiment is merely an example. For example, division into modules or units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate parts may or may not be physically separate, and parts displayed as units may be one or more physical units, may be located in one place, or may be distributed on different places. Some or all of the units may be selected based on actual requirements to achieve the objectives of the solutions in embodiments.

In addition, functional units in embodiments of this application may be integrated into one processing unit, each of the units may exist alone physically, or two or more units are integrated into one unit. The foregoing integrated unit may be implemented in a form of hardware, or may be implemented in a form of a software functional unit.

Any content of embodiments of this application and any content of a same embodiment may be freely combined. Any combination of the foregoing content falls within the scope of this application.

The foregoing describes embodiments of this application with reference to the accompanying drawings. However, this application is not limited to the foregoing specific implementations. The foregoing specific implementations are merely examples, but are not limitative. Inspired by this application, a person of ordinary skill in the art may further make many modifications without departing from the purposes of this application and the protection scope of the claims, and all the modifications shall fall within the protection scope of this application.

## Claims

1. A control method, applied to a central control device, wherein the method comprises:
dividing a display area into a plurality of grids based on first configuration information, wherein the first configuration information indicates a quantity of grids of the display area and a dimension of a single grid;
determining a layout of a plurality of functional areas in the display area based on second configuration information, wherein the second configuration information indicates a quantity of grids occupied by each of the plurality of functional areas and a location of each functional area in the display area; and
displaying a plurality of device controls in at least one of the plurality of functional areas, wherein the plurality of device controls one-to-one correspond to a plurality of electronic devices controlled by the central control device, each device control comprises device information of a corresponding electronic device, and the device information of the electronic device is obtained by the central control device from a cloud.

2. The method according to claim 1, wherein the first configuration information comprises first quantity information and dimension information, the first quantity information indicates a quantity of grids in a horizontal direction of the display area and a quantity of grids in a vertical direction of the display area, and the dimension information indicates a width and a height of the single grid.

3. The method according to claim 2, wherein the plurality of grids are evenly arranged in the horizontal direction and the vertical direction of the display area.

4. The method according to claim 1, wherein the second configuration information comprises second quantity information and start location information, the second quantity information indicates the quantity of grids occupied by each of the plurality of functional areas, and the start location information indicates a location of a start grid in each functional area in the display area.

5. The method according to claim 1, wherein the displaying a plurality of device controls in at least one of the plurality of functional areas comprises:
obtaining device information of the plurality of electronic devices from the cloud, wherein the device information comprises at least one of the following: device identification information of a single electronic device, a type of a single electronic device, state information of a single electronic device, and information about an allowed adjustment range of a single electronic device;
generating corresponding control identification information for each of the plurality of electronic devices, and storing a correspondence between the device information of the plurality of electronic devices and the plurality of pieces of control identification information;
indicating, to a target application, a part of the device information and a plurality of pieces of device identification information generated for the plurality of electronic devices, wherein the part of the device information comprises at least one piece of information in the device information; and
displaying the plurality of device controls in the at least one functional area, wherein the plurality of device controls are generated by the target application based on the part of the device information.

6. The method according to claim 5, wherein the method further comprises:
obtaining touch event information of the target application, wherein the touch event information comprises control identification information of a target electronic device and state update information of the target electronic device, the touch event information indicates that a touch event for a control of the target electronic device is received, the touch event indicates to update a state of the target electronic device, and the target electronic device belongs to the plurality of electronic devices;
verifying the control identification information of the target electronic device and the touch event; and
updating the control of the target electronic device after verification on the control identification information of the target electronic device and the touch event succeeds.

7. The method according to claim 6, wherein the verifying the control identification information of the target electronic device and the touch event comprises:
detecting whether the control identification information of the target electronic device is invalid, wherein the control identification information of the target electronic device is invalid when the central control device does not display the plurality of functional areas, and the control identification information of the target electronic device is valid when the central control device displays the plurality of functional areas; and
when detecting that the control identification information of the electronic device is valid, determining that verification on the control identification information of the target electronic device succeeds.

8. The method according to claim 6, wherein the verifying the control identification information of the target electronic device and the touch event comprises:
determining, based on a parameter detected by a touch sensor, whether a touch operation on the display area is received; and
when detecting that the touch operation on the display area occurs, determining that verification on the touch event succeeds.

9. The method according to claim 6, wherein the updating the control of the target electronic device comprises:
determining, based on the correspondence between the device information of the plurality of electronic devices and the plurality of pieces of control identification information, device identification information of the target electronic device that corresponds to the control identification information of the target electronic device;
sending a state update request message to the cloud, wherein the state update request message comprises the device identification information of the target electronic device and the state update information of the target electronic device, and the state update request message indicates the cloud to update a current state of the target electronic device to a state indicated by the state update information;
receiving a state update response message sent by the cloud, wherein the state update response message comprises the device identification information of the target electronic device and current state information of the target electronic device, and the current state information indicates a state of the target electronic device that is updated based on an indication of the cloud;
determining, based on the correspondence between the device information of the plurality of electronic devices and the plurality of pieces of control identification information, the control identification information of the target electronic device that corresponds to the device identification information of the target electronic device;
transmitting the control identification information and the current state information of the target electronic device to the target application, to indicate the target application to update the control of the target electronic device; and
obtaining a new control that is generated by the target application and that corresponds to the target electronic device, and updating the control of the target electronic device to the new control, wherein the new control is generated by the target application based on the current state information.

10. A central control device, comprising:
one or more processors;
a memory; and
one or more computer programs, wherein the one or more computer programs are stored in the memory, and when the computer program is executed by the one or more processors, the central control device is enabled to perform the following steps:
dividing a display area into a plurality of grids based on first configuration information, wherein the configuration information indicates a quantity of grids of the display area and a dimension of a single grid;
determining a layout of a plurality of functional areas in the display area based on second configuration information, wherein the second configuration information indicates a quantity of grids occupied by each of the plurality of functional areas and a location of each functional area in the display area; and
displaying a plurality of device controls in at least one of the plurality of functional areas, wherein the plurality of device controls one-to-one correspond to a plurality of electronic devices controlled by the central control device, each device control comprises device information of a corresponding electronic device, and the device information of the electronic device is obtained by the central control device from a cloud.

11. The device according to claim 10, wherein the first configuration information comprises first quantity information and dimension information, the first quantity information indicates a quantity of grids in a horizontal direction of the display area and a quantity of grids in a vertical direction of the display area, and the dimension information indicates a width and a height of the single grid.

12. The device according to claim 11, wherein the plurality of grids are evenly arranged in the horizontal direction and the vertical direction of the display area.

13. The device according to claim 10, wherein the second configuration information comprises second quantity information and start location information, the second quantity information indicates the quantity of grids occupied by each of the plurality of functional areas, and the start location information indicates a location of a start grid in each functional area in the display area.

14. The device according to claim 10, wherein when the computer program is executed by the one or more processors, the central control device is enabled to perform the following steps:
obtaining device information of the plurality of electronic devices from the cloud, wherein the device information comprises at least one of the following: device identification information of a single electronic device, a type of a single electronic device, state information of a single electronic device, and information about an allowed adjustment range of a single electronic device;
generating corresponding control identification information for each of the plurality of electronic devices, and storing a correspondence between the device information of the plurality of electronic devices and the plurality of pieces of control identification information;
indicating, to a target application, a part of the device information and a plurality of pieces of device identification information generated for the plurality of electronic devices, wherein the part of the device information comprises at least one piece of information in the device information; and
displaying the plurality of device controls in the at least one functional area, wherein the plurality of device controls are generated by the target application based on the part of the device information.

15. The device according to claim 14, wherein when the computer program is executed by the one or more processors, the central control device is enabled to perform the following steps:
obtaining touch event information of the target application, wherein the touch event information comprises control identification information of a target electronic device and state update information of the target electronic device, the touch event information indicates that a touch event for a control of the target electronic device is received, the touch event indicates to update a state of the target electronic device, and the target electronic device belongs to the plurality of electronic devices;
verifying the control identification information of the target electronic device and the touch event; and
updating the control of the target electronic device after verification on the control identification information of the target electronic device and the touch event succeeds.

16. The device according to claim 15, wherein when the computer program is executed by the one or more processors, the central control device is enabled to perform the following steps:
detecting whether the control identification information of the target electronic device is invalid, wherein the control identification information of the target electronic device is invalid when the central control device does not display the plurality of functional areas, and the control identification information of the target electronic device is valid when the central control device displays the plurality of functional areas; and
when detecting that the control identification information of the electronic device is valid, determining that verification on the control identification information of the target electronic device succeeds.

17. The device according to claim 15, wherein when the computer program is executed by the one or more processors, the central control device is enabled to perform the following steps:
determining, based on a parameter detected by a touch sensor, whether a touch operation on the display area is received; and
when detecting that the touch operation on the display area occurs, determining that verification on the touch event succeeds.

18. The device according to claim 15, wherein when the computer program is executed by the one or more processors, the central control device is enabled to perform the following steps:
determining, based on the correspondence between the device information of the plurality of electronic devices and the plurality of pieces of control identification information, device identification information of the target electronic device that corresponds to the control identification information of the target electronic device;
sending a state update request message to the cloud, wherein the state update request message comprises the device identification information of the target electronic device and the state update information of the target electronic device, and the state update request message indicates the cloud to update a current state of the target electronic device to a state indicated by the state update information;
receiving a state update response message sent by the cloud, wherein the state update response message comprises the device identification information of the target electronic device and current state information of the target electronic device, and the current state information indicates a state of the target electronic device that is updated based on an indication of the cloud;
determining, based on the correspondence between the device information of the plurality of electronic devices and the plurality of pieces of control identification information, the control identification information of the target electronic device that corresponds to the device identification information of the target electronic device;
transmitting the control identification information and the current state information of the target electronic device to the target application, to indicate the target application to update the control of the target electronic device; and
obtaining a new control that is generated by the target application and that corresponds to the target electronic device, and updating the control of the target electronic device to the new control, wherein the new control is generated by the target application based on the current state information.

19. A computer storage medium, comprising computer instructions, wherein when the computer instructions are run on an electronic device, the electronic device is enabled to perform the method according to any one of claims 1 to 9.

20. A computer program product, wherein when the computer program product runs on a computer, the computer is enabled to perform the method according to any one of claims 1 to 9.

21. A chip, comprising one or more interface circuits and one or more processors, wherein the interface circuit is configured to: receive a signal from a memory of an electronic device, and send the signal to the processor, wherein the signal comprises computer instructions stored in the memory; and when the processor executes the computer instructions, the electronic device is enabled to perform the method according to any one of claims 1 to 9.
